# EUROPEAN PATENT SPECIFICATION

(11) **EP 3 901 659 B1**
(45) Date of publication and mention of the grant of the patent: **11.11.2026**
(21) Application number: 21169833.7
(22) Date of filing: 22.04.2021
(51) Int. Cl.: G01S 7/527, G01S 15/42, G01S 15/89, G01S 15/96

(54) **UNDERWATER DETECTION DEVICE AND UNDERWATER DETECTION METHOD**
VORRICHTUNG ZUR UNTERWASSERDETEKTION UND VERFAHREN ZUR UNTERWASSERDETEKTION
APPAREIL ET PROCÉDÉ DE DÉTECTION SOUS-MARINE

(30) Priority: 24.04.2020 JP 2020077337
(43) Date of publication of application: 27.10.2021
(73) Proprietor: Furuno Electric Company Limited, Hyogo 662-8580 (JP)
(72) Inventor: MISONOO, Satoshi, Nishinomiya-city, 662-8580 (JP); MATSUMURA, Takashi, Nishinomiya-city, 662-8580 (JP); NISHIKUBO, Daisuke, Nishinomiya-city, 662-8580 (JP)
(74) Representative: Cleveland Scott York

(56) References cited:
- JP-A- H03 134 584
- US-A1- 2008 080 313

## Description

The present disclosure relates to an underwater detection device and an underwater detection method, which transmit a sound wave underwater to detect an underwater condition based on a reflection wave of the transmitted sound wave.

Conventionally, it is known that an underwater detection device detects conditions of a school of fish and a bottom of water by forming beams in different directions for transmitting and receiving signals. This type of underwater detection device can widen its detection range by using a plurality of beams. However, when the plurality of beams are simultaneously transmitted and received, a false image may appear on a detection image of each beam due to mutual interference between the beams.

**In** order to solve the problem, a method of transmitting and receiving the beams at different timings may be used. However, in this method, a cycle to finish the transmissions and receptions for all the beams becomes longer. Another method is to transmit the beams at different frequencies, and extract a reception signal of each beam by a reception system discriminating the frequencies of the beams. However, since in this method the frequency of each beam needs to be set at a high frequency band, the device is limited to be used in shallow water.

Therefore, in order to solve the two problems described above, a method may be used, in which a mode is switched between transmitting and receiving beams at the same transmission frequency at different timings, and transmitting and receiving beams at different transmission frequencies at the same timing. JP1991-134584A discloses a fishfinder of this type.

However, in the method of switching the mode as described above, since the mode is merely switched, the problems in each mode described above remain during the execution of the mode.

US 2008/0080313 A1 discloses a system and method for measuring velocity in a fluid medium utilizing a transducer. The method comprises transmitting an acoustic signal comprising N pings for each of a plurality of beams, receiving echoes from each ping, obtaining a velocity estimate for each of the N pings based on echoes of the ping, and calculating a velocity based on the sum of the N velocity estimates such that the velocity is substantially free from error caused by cross-coupling between the beams.

The present disclosure is made in view of solving the above problems, and one purpose thereof is to provide an underwater detection device and an underwater detection method, capable of effectively shortening a cycle of transmissions and receptions of all beams, while suppressing a false image being generated due to mutual interference between the beams.

According to one aspect of the present invention there is provided an underwater detection device as defined in claim 1.

According to another aspect of the invention there is provided an underwater detection method as defined in claim 5.

Preferred features of the invention are recited in the dependent claims.

According to the underwater detection device, among the plurality of beams, the combination of beams which can suppress the mutual interference are simultaneously transmitted and received. Therefore, the cycle to finish the transmissions and receptions for all the beams can be shorter while suppressing a false image being generated due to the mutual interference.

The condition is set based on a direction, an attenuating amount of a reflection intensity at a water bottom, and a directivity characteristic of each beam.

The reception level of the echo reflected on the water bottom can be calculated based on the sonar equation. Among parameters defining the sonar equation, parameters which vary depending on the direction of the beams are the attenuating amount of the reflection intensity at the water bottom and the directivity characteristic. Thus, based on the attenuating amount of the reflection intensity at the water bottom and the directivity characteristic, the combination of beams which suppresses the mutual interference can be set suitably. Therefore, as described above, by setting the condition for the combination of beams for suppressing the influence of the mutual interference, based on the direction, the attenuating amount of the reflection intensity at the water bottom, and the directivity characteristic of each beam, the combination of beams which suppresses the mutual interference can be set suitably.

For example, the condition may include that directions of the combination of beams are symmetrical with respect to an axis extending directly below a transducer.

When this condition is satisfied, one beam may be most unlikely to interfere with the other beam, and the false image due to the other beam may be most unlikely to be generated. Therefore, by setting such a condition, the combination of beams which suppresses the mutual interference can be set suitably.

Alternatively, the condition may include that directions of the combination of beams are other than directly below a transducer.

Since the directly-downward beam has the smallest attenuation amount of the reflection intensity at the water bottom and has the largest echo intensity, it easily and greatly influences the reception signal of the beam oriented to the other direction. Moreover, since the echo of the directly-downward beam is received earlier than that of the beam oriented to the other direction, it easily appears as the false image near the water-bottom image generated based on the other direction beam. Therefore, by excluding the directly-downward beam from the beams to be transmitted and received simultaneously as the condition described above, the false image may be suppressed to appear in the image generated based on the beams oriented other than directly below.

Alternatively, the condition may include that directions of the combination of beams have the same tilt angle with respect to an axis extending directly below a transducer.

When the beams of which the directions have the same tilt angle with respect to the axis extending directly below the transducer, are simultaneously transmitted, since the roundtrip distance of the beams to the water bottom are substantially the same as each other, there is almost no difference between the reception timings of the beams. Thus, even when these beams are simultaneously transmitted and received, the false image due to the other beams is difficult to appear near the water-bottom image generated based on each beam. Therefore, according to the condition, the plurality of beams can be simultaneously transmitted and received suitably while suppressing the appearance of the false image due to the other beams in the image generated based on each beam.

As described above, according to the present disclosure, an underwater detection device and an underwater detection method can be provided, which are capable of effectively shortening a cycle of transmissions and receptions of all beams, while suppressing a false image generated due to mutual interference between the beams.

The effects and purpose of the present disclosure will be clear from the following description of the embodiment. However, the embodiment described below is merely an example of implementing the present disclosure, and the present disclosure will not be limited to what described in the embodiment.

The present disclosure is illustrated by way of example and not by way of limitation in the figures of the accompanying drawings, in which like reference numerals indicate like elements and in which:
Fig. 1 is a view illustrating a mode of using an underwater detection device according to one embodiment;
Figs. 2A, 2B, and 2C are views schematically illustrating a state in which a plurality of transmission beams are formed in a left-and-right direction of a ship, according to this embodiment;
Fig. 3 is a block diagram illustrating a configuration of the underwater detection device according to this embodiment;
Fig. 4A is a time chart illustrating transmission timings in a case where the plurality of transmission beams are simultaneously transmitted, and Figs. 4B, 4C, and 4D are time charts schematically illustrating levels of reception signals of echoes each generated by reflection of the transmission wave transmitted at the timing illustrated in Fig. 4A on a bottom of water, according to this embodiment;
Fig. 5 is a view illustrating images of the water bottom generated based on the reception signals of reception beams illustrated in Figs. 4B, 4C, and 4D, according to this embodiment;
Fig. 6A is a view illustrating an example of forming the transmission beams and the reception beams according to this embodiment, and Fig. 6B is a view illustrating the echoes when the transmission beams are reflected on the water bottom, according to this embodiment;
Fig. 7 is a flowchart illustrating a control for transmitting and receiving the beam according to this embodiment;
Fig. 8 is a flowchart illustrating processing for determining a non-interference condition according to this embodiment;
Figs. 9A, 9B, and 9C are views schematically illustrating controlling operation in a case where five transmission beams for the underwater detection are set in a given method according to this embodiment;
Figs. 10A, 10B, and 10C are views schematically illustrating controlling operation in a case where five transmission beams for the underwater detection are set in another method according to this embodiment;
Figs. 11A, 11B, and 11C are views schematically illustrating controlling operation in a case where five transmission beams for the underwater detection are set in still another method according to this embodiment;
Fig. 12 is a flowchart illustrating processing for determining a non-interference condition according to Modification 1 not according to the claimed invention;
Figs. 13A and 13B are views schematically illustrating controlling operation in a case where five transmission beams for the underwater detection are set in a given method according to Modification 1;
Fig. 14 is a flowchart illustrating processing for determining a non-interference condition according to Modification 2 not according to the claimed invention;
Figs. 15A, 15B, and 15C are views schematically illustrating controlling operation in a case where five transmission beams for the underwater detection are set in a given method according to Modification 2;
Fig. 16 is a flowchart illustrating processing for determining a non-interference condition according to Modification 3 not according to the claimed invention;
Figs. 17A, 17B, and 17C are views schematically illustrating controlling operation in a case where five transmission beams for the underwater detection are set in a given method according to Modification 3; and
Fig. 18A is a view illustrating a state of the transmission beams when the ship inclines (rolls) according to another modification, and Fig. 18B is a view illustrating a combination of beams simultaneously transmitted and received when the ship inclines according to the other modification not according to the claimed invention.

Hereinafter, one embodiment of the present disclosure is described with reference to the drawings. The following embodiment describes an example of applying the present disclosure to an underwater detection device installed in a ship body of a fishing boat. However, the following embodiment is one embodiment of the present disclosure, and the present disclosure is not limited to the following embodiment. Note that the present disclosure may be applied to ships which typically travel on water or sea which are referred to as surface ships, and may also be applied to other types of ships including boats, dinghies, watercrafts, and vessels.

The underwater detection device of this embodiment may be used as a fishfinder.

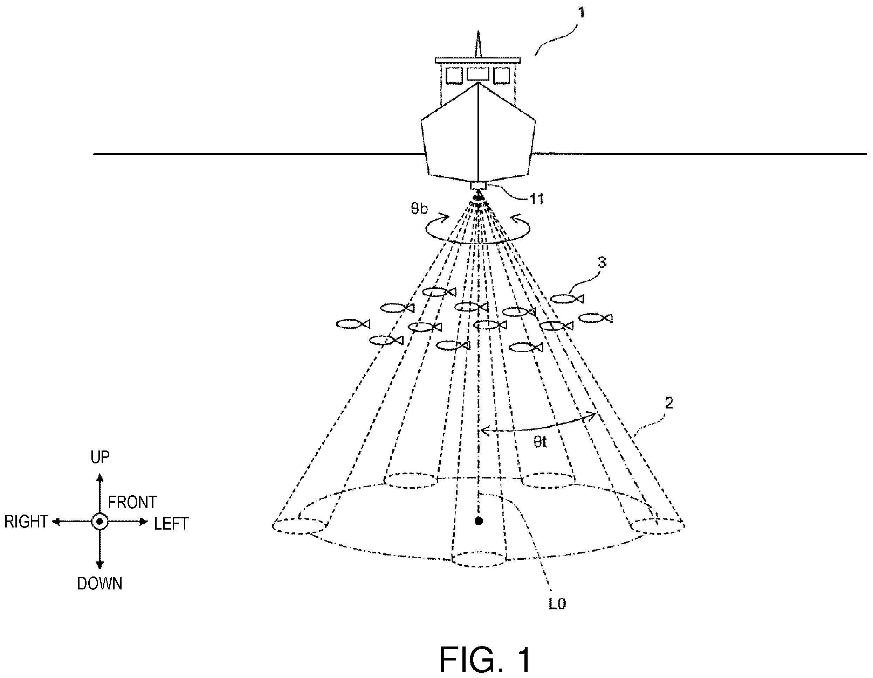

Fig. 1 is a view illustrating a mode of using the underwater detection device. In the figures including Fig. 1, axes indicative of a front-and-rear direction, a left-and-right direction, and an up-and-down direction of a ship 1 are illustrated for convenience.

As illustrated in Fig. 1, in this embodiment, a transducer 11 constituting the underwater detection device may be installed in a bottom of the ship 1, and the transducer 11 may transmit a transmission beam 2 underwater. The transmission beam 2 is, for example, an ultrasonic wave. The number and a direction of the transmission beam 2 to be transmitted underwater are arbitrarily set by a user within a settable range.

A tilt angle θt of the transmission beam 2 with respect to an axis L0, which extends right below the transducer 11, can be set within a range from 0° to 20°, for example. Moreover, a bearing angle θb of the transmission beam 2 centering on the axis L0 from the forward direction (i.e., a bow direction) can be set within a range from 0° to 360°, for example. The number of transmission beams 2 can be set within a range from one to five, for example. However, the settable ranges of the tilt angle θt, the bearing angle θb, and the number of transmission beams 2 are not limited to the ranges described above.

When the transducer 11 receives an echo of the transmission beam 2, for example, a fish 3 and a water bottom (seabed) in the direction of the transmission beam 2 are detected. Here, distances to the fish 3, the seabed, etc., may be calculated based on time taken from the transmission of the transmission beam 2 to the reception of the echo. Moreover, for example, a length of the fish 3 is calculated based on an intensity of the echo. Based on these calculation results, an image representing a position and the size of a school of fish in the direction of the transmission beam 2, and an image representing a distribution of the lengths of the fish 3 included in the school of fish, may be displayed along with the water bottom on a display unit installed in a wheelhouse etc. of the ship 1.

In this embodiment, the transmission beam 2 may spread from the transducer 11 substantially in a cone shape within a narrow range. The range of the cone-shaped transmission beam 2 may be a detection range of the transmission beam 2. The transmission beam 2 may move horizontally as the ship 1 travels. Accordingly, an underwater condition which sequentially changes along with the travel of the ship 1, may be chronologically displayed on the display unit.

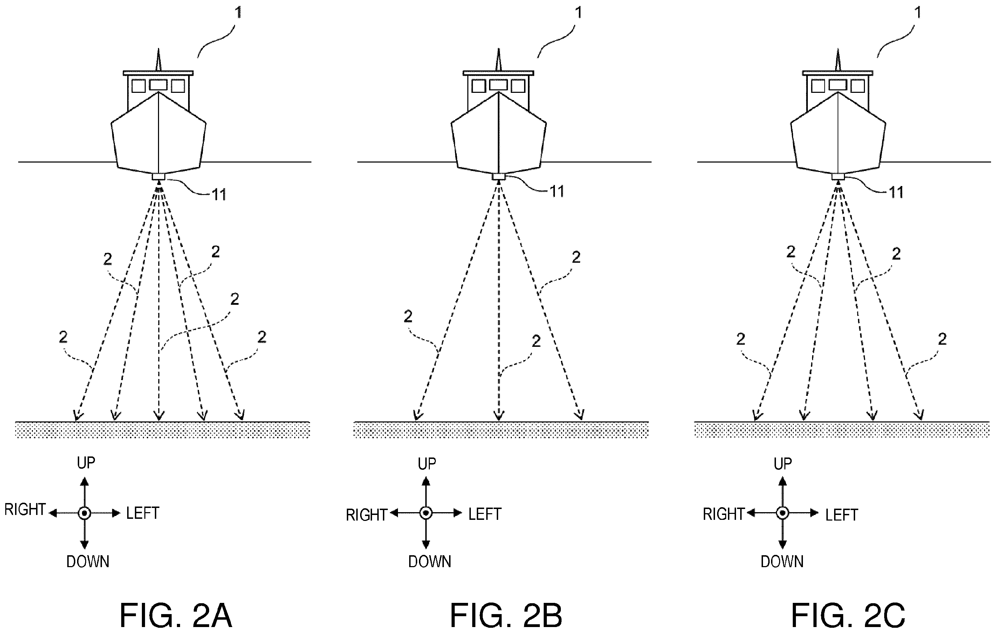

Figs. 2A to 2C are views schematically illustrating a state where a plurality of transmission beams 2 are formed in the left-and-right direction of the ship 1.

In Fig. 2A, the transmission beam 2 oriented directly below, and two pairs of transmission beams 2, each pair having the same tilt angle θt in the left and right directions, are formed. In Fig. 2B, the transmission beam 2 oriented directly below (directly-downward transmission beam), and one pair of the transmission beams 2 having the same tilt angle θt in the left and right directions, are formed. In Fig. 2C, the directly-downward transmission beam 2 is not formed, but the two pairs of transmission beams 2, each pair having the same tilt angle θt in the left and right directions, are formed.

As described above, the user can arbitrarily set the directions and the number of the transmission beams 2 within the settable range by using a control unit (not illustrated) installed in the wheelhouse. Although in Figs. 2A to 2C the plurality of transmission beams 2 are formed in the left-and-right direction of the ship 1, they may be formed in the front-and-rear direction of the ship 1, or in a circumferential direction of the ship 1 as illustrated in Fig. 1.

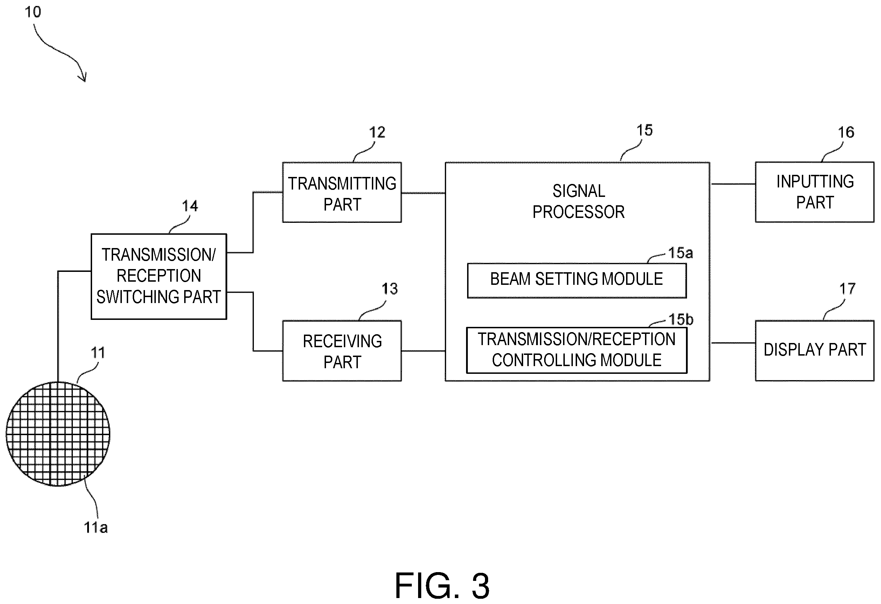

Fig. 3 is a block diagram illustrating a configuration of an underwater detection device 10.

The underwater detection device 10 may include the transducer 11, a transmitting part 12, a receiving part 13, a transmission/reception switching part 14, a signal processor 15, an inputting part 16, and a display part 17.

The transducer 11 may be attached to the ship bottom of the ship 1 to orient directly below the ship 1. The transducer 11 may be provided with a plurality of arrayed ultrasonic oscillators 11a. Upon the transmission of waves, each ultrasonic oscillator 11a may be applied with a transmission signal in a sine-wave shape. Accordingly, an ultrasonic wave may be transmitted from the ultrasonic oscillator 11a, and the transmission beam 2 illustrated in Fig. 1 may be formed. By adjusting a phase of the transmission signal applied to each ultrasonic oscillator 11a, the direction of the transmission beam 2 may be adjusted.

The receiving part 13 may receive an input of a reception signal from each ultrasonic oscillator 11a via the transmission/reception switching part 14. The receiving part 13 may apply a phase control (beam forming) to the reception signal from the ultrasonic oscillator 11a so as to form the reception beam in the same direction as the corresponding transmission beam 2. The receiving part 13 may output the reception signal of each reception beam to the signal processor 15.

The transmission/reception switching part 14 may connect the transmitting part 12 to the transducer 11 during the transmission of the wave, and connect the receiving part 13 to the transducer 11 during the reception of the wave. A timing at which the transmission/reception switching part 14 switches between the transmission and the reception may be controlled by the signal processor 15. As described later, in this embodiment, a sequence in which the plurality of beams (transmission beams 2 and reception beams) are transmitted and received at the same timing (simultaneously), and a sequence in which the plurality of beams are transmitted and received at different timings, may be performed. The transmission/reception switching part 14 may switch the connection of the transducer 11 to the transmitting part 12 and to the receiving part 13, according to these sequences based on the control by the signal processor 15.

The signal processor 15 may be provided with an arithmetic circuit, such as a CPU (Central Processing Unit), and a storage medium, such as a ROM (Read Only Memory), a RAM (Random Access Memory), and a hard disk. The signal processor 15 may execute the underwater detection processing by controlling each part based on a program stored in the storage medium. The signal processor 15 may be comprised of an integrated circuit, such as an FPGA (Field-Programmable Gate Array).

Note that the signal processor 15 is not necessarily comprised of a single integrated circuit, but may be a set of the integrated circuits and/or the arithmetic circuits. For example, the signal processor 15 may be provided with an arithmetic circuit which controls the transmitting part 12, the transmission/reception switching part 14, etc., and another arithmetic circuit which generates a given image by processing the reception signal inputted from the receiving part 13.

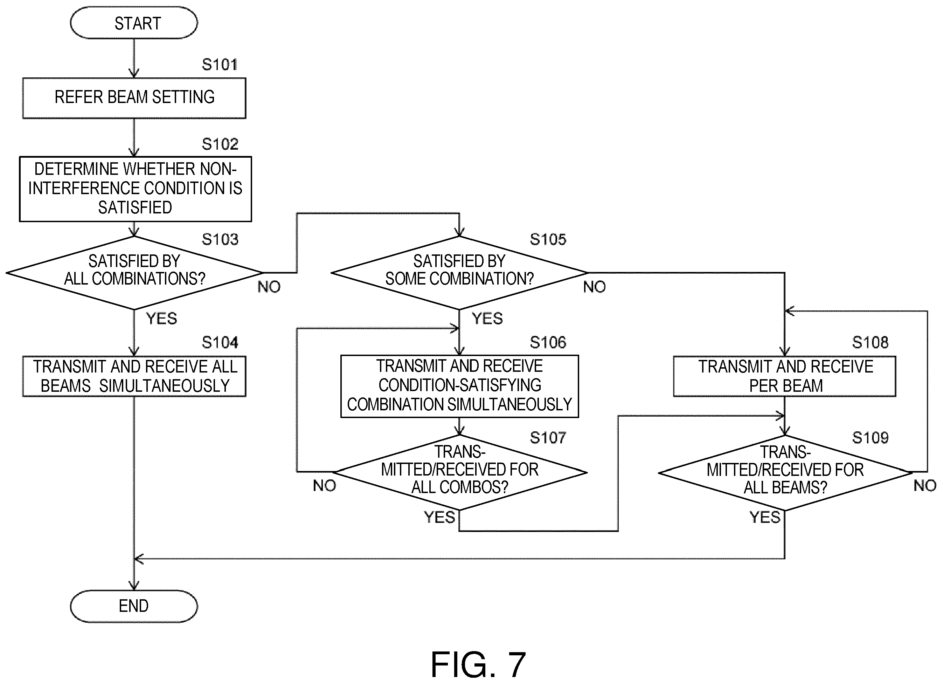

The signal processor 15 may implement functions of a beam setting module 15a and a transmission/reception controlling module 15b based on the program. The beam setting module 15a may be a functional part which sets a combination of beams (including the transmission and reception beams) which satisfies a condition for suppressing an influence of mutual interference. The transmission/reception controlling module 15b may be a functional part which transmits and receives the above combination of beams at the same timing, and transmits and receives the other beams separately. Processing by these functional parts will be described later with reference to Fig. 7.

Note that although here the beam setting module 15a and the transmission/reception controlling module 15b are provided to the signal processor 15 as the functional parts implemented based on the program, they may be comprised of hardware, such as a logic circuit.

The inputting part 16 may be a user interface which accepts an input from the user. The inputting part 16 may be provided with an inputting means, such as a mouse and a keyboard. The inputting part 16 may be a touch panel integrated with the display part 17. The display part 17 may display the image generated by the signal processor 15 for each beam. The display part 17 may be provided with a display unit, such as a monitor and a liquid crystal panel.

Meanwhile, the underwater detection device 10 configured as described above can shorten a cycle to process all types of the transmission beams 2 (processing for one ping), by simultaneously transmitting the plurality of transmission beams 2 for the transmissions and receptions of the beams (the transmission and reception beams). However, when the beams are simultaneously transmitted and received as described above, the mutual interference occurs between the beams, and thus, a false image may appear in an image obtained from one beam due to the mutual interference.

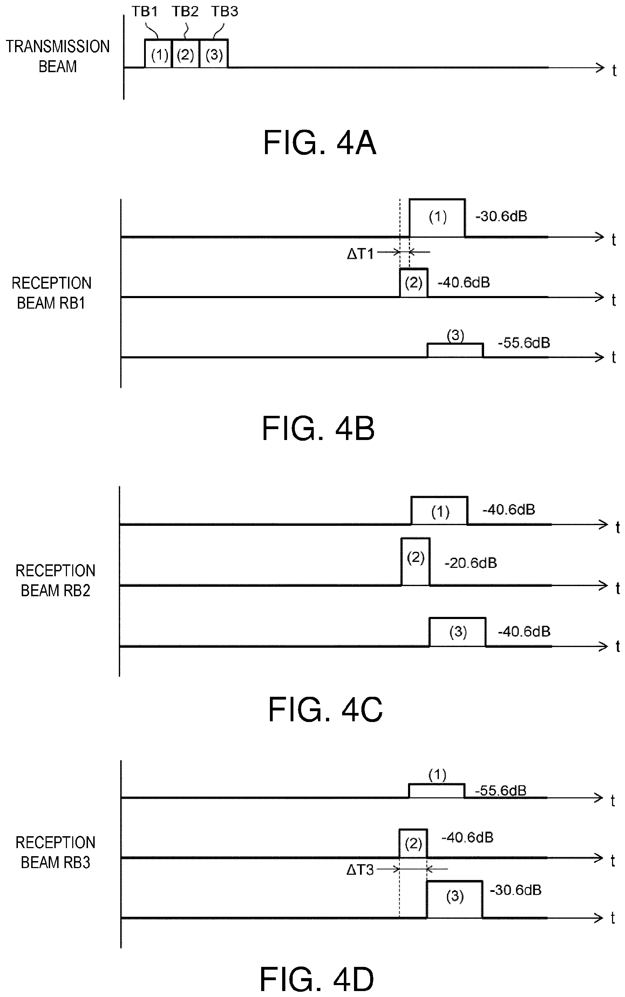

Figs. 4A to 4D are time charts schematically illustrating signal levels of the echoes of the transmission beams reflected on the water bottom when the plurality of the transmission beams 2 are simultaneously transmitted.

Here, it is assumed as illustrated in Fig. 2B that the transmission beams 2 are transmitted directly downward, leftward, and rightward. The tilt angles θt of the left and right transmission beams 2 may be the same. Moreover, the bearing angles θb of the left and right transmission beams 2 from the bow direction may be 90° and 270°, respectively.

Fig. 4A illustrates transmission timings of the three transmission beams 2. Here, for convenience, the leftward transmission beam 2 is represented as a transmission beam TB1, the directly-downward transmission beam 2 is represented as a transmission beam TB2, and the rightward transmission beam 2 is represented as a transmission beam TB3. As illustrated in Fig. 4A, the transmission beams TB1 to TB3 may be sequentially transmitted without a time gap therebetween, that is, substantially at the same timing.

Figs. 4B, 4C, and 4D are views schematically illustrating levels of the reception signals of the echoes generated by the reflection of the transmission beams TB1 to TB3 on the water bottom.

Fig. 4B illustrates the reception signal levels of the echoes acquired by a reception beam RB1 corresponding to the leftward transmission beam TB1. Fig. 4C illustrates the reception signal levels of the echoes acquired by a reception beam RB2 corresponding to the directly-downward transmission beam TB2. Fig. 4D illustrates the reception signal levels of the echoes acquired by a reception beam RB3 corresponding to the rightward transmission beam TB3. The reference characters (1) to (3) indicated in Figs. 4B, 4C, and 4D represent the transmission beams TB1 to TB3 assigned with the reference characters (1) to (3) in Fig. 4A, respectively. **In** Figs. 4B, 4C, and 4D, the levels of the reception signals of the echoes are indicated by a unit of decibel for convenience.

As illustrated in Fig. 4B, the reception signals acquired by the reception beam RB1 may include the reception signal of the echo of the transmission beam TB1, as well as the reception signals of the echoes of the transmission beams TB2 and TB3 superimposed on the reception signal of the transmission beam TB1. Here, since a direction of the reception beam RB1 is the same as the transmission beam TB 1, the reception signal level of the echo of the transmission beam TB1 (-30.6dB) may be higher than the reception signal levels of the echoes of the other two transmission beams TB2 and TB3 (-40.6dB and -55.6dB).

However, since the distance to the water bottom directly below is shorter than those in the left and right oblique directions, the directly-downward transmission beam TB2 may be reflected on the water bottom before the leftward and rightward transmission beams TB1 and TB3. Therefore, the echo of the transmission beam TB2 may be likely to be received before the echo of the transmission beam TB1, and thus, the reception signal of the echo of the transmission beam TB2 may be likely to be generated before the reception signal of the echo of the transmission beam TB1. As a result, in the image of the water bottom based on the reception beam RB1, a false image may appear by a distance corresponding to a time difference ΔT1 before the intended water-bottom image based on the echo of the transmission beam TB1.

Similarly, as for the reception signals acquired by the reception beam RB3, as illustrated in Fig 4D, a false image may appear by a distance corresponding to a time difference ΔT3, in the image of the water bottom based on the reception beam RB3. In this case, as illustrated in Fig. 4A, since the transmission beam TB3 is transmitted after the transmission beam TB2, the time difference ΔT3 between the reception timing of the echo of the transmission beam TB3 and the reception timing of the echo of the directly-downward transmission beam TB2 may be larger than the time difference ΔT1 of Fig. 4B. As a result, in the image of the water bottom based on the reception beam RB3, a false image having a larger distance width may appear before the intended water-bottom image based on the echo of the transmission beam TB3.

Note that as for the reception signals acquired by the reception beam RB2, as illustrated in Fig. 4C, the reception signal of the echo of the transmission beam TB2, which is to be acquired by the reception beam RB2, may appear first. Therefore, the false images based on the transmission beams TB1 and TB3 may be unlikely to appear before the intended water-bottom image based on the echo of the transmission beam TB2.

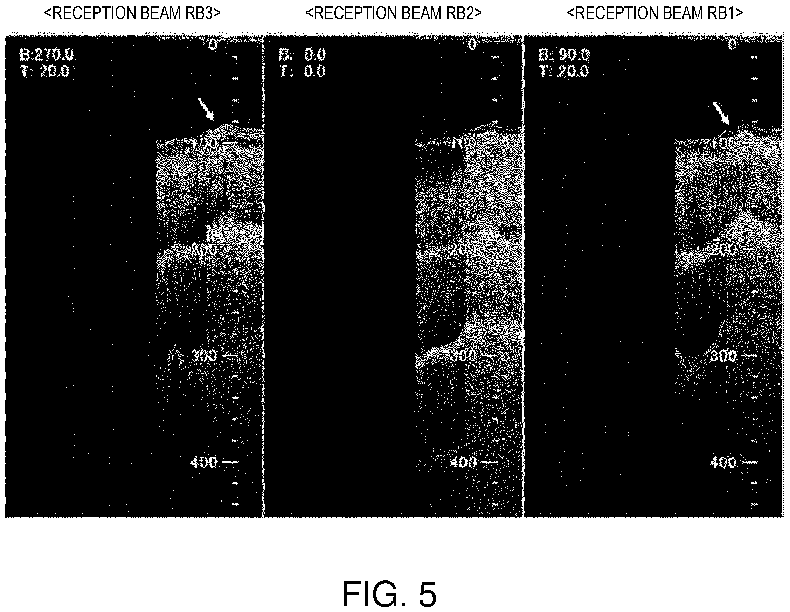

Fig. 5 is a view illustrating the images of the water bottom generated based on the reception signals of the reception beams RB1 to RB3 illustrated in Figs. 4B, 4C, and 4D. Note that the three images in Fig. 5 are grayscale images of actual colored images. In the actual images, a displayed color may approach red as the signal level increases. Therefore, in the images in Fig. 5, belt-shaped red ranges indicative of the water bottom are displayed in black in the grayscale.

**In** the image based on the reception beam RB1 as illustrated in a right view in Fig. 5, the false image may appear near a point indicated by a white arrow above the water bottom. Similarly, also in the image based on the reception beam RB3 as illustrated in a left view in Fig. 5, the false image may appear near a point indicated by a white arrow above the water bottom. When the left and right views in Fig. 5 are compared, a width of the false image may be larger in the image based on the reception beam RB3. This may be considered to be because, as described above with reference to Fig. 4D, the time difference ΔT3 is larger than the time difference ΔT1.

As described above, when the transmission beams TB1 to TB3 are simultaneously transmitted upon the transmissions and receptions of the signals, the false image due to the mutual interference with the other transmission beams may be displayed in the image generated based on each transmission beam. Such a false image may bury a fish, particularly, when the user confirms a bottom fish through the image, and thus, the user may not be able to smoothly confirm the bottom fish.

Therefore, in this embodiment, the configuration for shortening the cycle for one ping by simultaneously transmitting and receiving the plurality of beams, while suppressing the appearance of the false image based on the mutual interference, is used. The configuration is described below.

First, a relation between the direction of the beams (the transmission and reception beams) and the echo level is described.

The reception level of the echo reflected on the water bottom can be calculated based on the following sonar equation. $EL = SL + ME + SS + GAL + DI - 20 logR + G$ (1)

- SL:: Source Level (Transmission level of sound source) [dBuPa]
- ME:: Reception Voltage Sensitivity (Sensitivity of transducer alone) [dBV/uPa]
- SS:: Water-bottom Backscattering Intensity (Hardness of water bottom) [dB]
- GAL:: Attenuation Amount of Reflection Intensity at Water Bottom (≤0) [dB]
- DI:: Directivity Characteristic (≤0) [dB]
- G:: Receiver Sensitivity (Sensitivity of entire receiving part) [dB]
- R:: Range (Depth to water bottom) [M]

Among these parameters, parameters which vary according to the direction of the beams may be the GAL (attenuating amount of the reflection intensity) and the DI (directivity characteristic).

The DI (directivity characteristic) may be a parameter which varies according to a directional difference between the transmission beam and the reception beam, and indicate a gain corresponding to the directional difference assuming that the DI is 0dB when the directions of the transmission beam and the reception beam are the same. The DI may increase in a negative direction (i.e., an attenuation increases) as the directional difference between the transmission beam and the reception beam increases. That is, as the directional difference between the transmission beam and the reception beam increases, the DI may increase in the negative direction, which reduces the reception level of the echo of the transmission beam based on Equation (1).

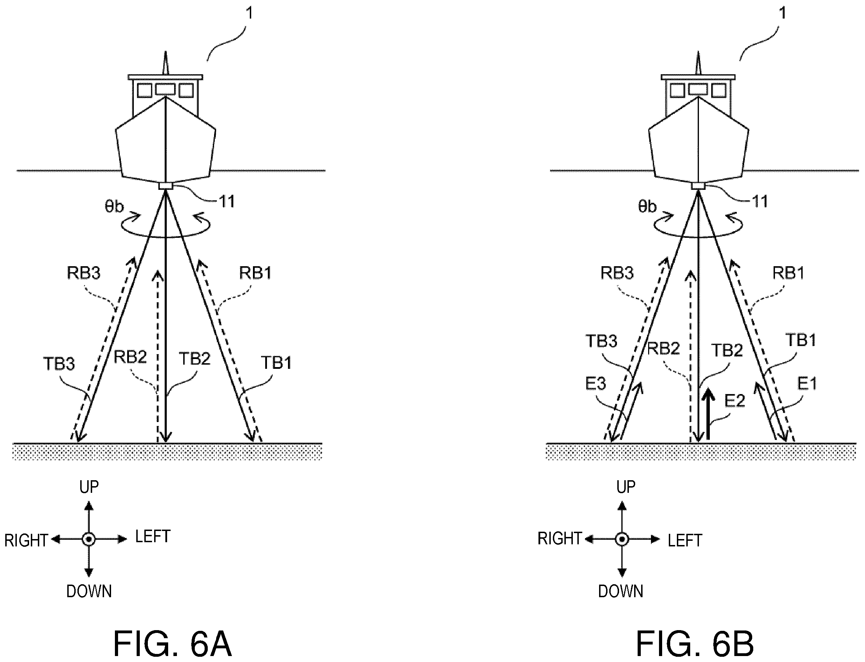

Therefore, for example, when the transmission beams TB1 to TB3 are formed in the different directions as illustrated in Fig. 6A, and the reception beams RB1 to RB3 are formed in the same directions as the corresponding transmission beams TB1 to TB3, as a directional difference between the two transmission beams (TB1 and TB3) increases in the bearing direction θb, the reception beam corresponding to one of the two transmission beams may be unlikely to affect the echo of the other transmission beam. In the example of Fig. 6A, since the directional difference between the transmission beam TB1 and the transmission beam TB3 is 180° (the maximum in the bearing angle θb direction), the echo of the transmission beam TB3 may be most unlikely to affect the reception beam RB1. Moreover, the echo of the transmission beam TB1 may be most unlikely to affect the reception beam RB3.

Therefore, in terms of the DI, in the combination of the transmission beams having the maximum directional difference (180°) in the bearing angle θb direction, the interference of the echo of one transmission beam to the reception signal of the other reception beam can be reduced even when the transmissions and receptions for the transmission beams are performed simultaneously. As a result, it can be suppressed that the false image appears in the image based on one reception beam, due to the echo of the other transmission beam.

Moreover, among the parameters described above, the GAL (attenuation amount of the reflection intensity) may be the parameter which varies according to an incidence angle of the transmission beam with respect to the water bottom, and indicate an attenuating amount of the reflection intensity at the water bottom at an incidence angle of X°, assuming that the GAL is 0dB when the incidence angle is 0°. The GAL may increase in the negative direction (i.e., the attenuation increases) as the incidence angle of the transmission beam to the water bottom increases. That is, as the incidence angle of the transmission beam to the water bottom increases, the GAL may increase in the negative direction, which reduces the reception level of the echo of the transmission beam based on Equation (1). In other words, when the transmission beam is vertically entered to the water bottom, the GAL may become the minimum (0dB) and the echo level reflected on the water bottom may increase.

Therefore, for example, as illustrated in Fig. 6B, when the transmission beams TB1 to TB3 are formed in the different directions, and the reception beams RB1 to RB3 are formed in the same directions as the corresponding transmission beams TB1 to TB3, an intensity level of an echo E2 of the directly-downward transmission beam TB2 reflected on the water bottom toward the transducer 11, may be larger than intensity levels of echoes E1 and E3 of the oblique transmission beams TB1 and TB3 reflected on the water bottom toward the transducer 11. Thus, when the transmissions and receptions using the transmission beams TB1 to TB3 are performed simultaneously, the echo E2 of the directly-downward transmission beam TB2 may largely affect the reception signals acquired by the reception beams RB1 and RB3.

Therefore, in terms of the GAL, the transmission and reception using the directly-downward transmission beam may be better not to be performed simultaneously with the transmissions and receptions using the oblique transmission beams. Accordingly, it can be suppressed that the echo of the directly-downward transmission beam interferes with the transmissions and receptions using the other transmission beams, and suppressed that the false image based on the echo of the directly-downward transmission beam appears in the image based on the other transmission beams.

Moreover, since the transmission beam with a smaller tilt angle θt has a shorter distance to the water bottom, the reception timing of the echo may be faster. In other words, the transmission beams with the same tilt angle θt may not have a difference in the reception timing of the echo. Therefore, when two transmission beams with the same tilt angle θt are simultaneously transmitted, the signal from the water bottom based on the echo of one transmission beam may appear at substantially the same timing as the signal from the water bottom based on the echo of the other transmission beam, in the reception signal of the one transmission beam. As a result, the time differences ΔT1 and ΔT3 as illustrated in Figs. 4B and 4D may not occur between the signals, and thus, the false image based on the time difference may be unlikely to appear above the water-bottom image.

Accordingly, in terms of the tilt angle θt, when the combination of the transmission beams has the same tilt angle θt, the appearance of the false image due to the echo of one transmission beam, in the image based on the other reception beam, can be suppressed even when the transmissions and receptions using these transmission beams are performed simultaneously.

Note that having the same tilt angle θt may be equal to having the same GAL. That is, two transmission beams with the same tilt angle θt may have the same incidence angle with respect to the water bottom, thus having the same GAL. Therefore, in terms of the GAL, when the transmission beams have the combination having the minimum (zero) difference in the GAL therebetween, the appearance of the false image due to the echo of one transmission beam, in the image based on the other reception beam, can be suppressed even when the transmissions and receptions using these transmission beams are performed simultaneously.

Based on the above examinations, when the transmissions and receptions are performed simultaneously for the plurality of transmission beams in different directions, the false image due to the echo of one transmission beam from the water bottom can be suppressed from appearing near the water bottom in the image based on the other transmission beam, as long as the combination of the transmission beams satisfies the following two conditions. One condition may be that the difference between the GALs of the plurality of transmission beams is the minimum (zero) (i.e., the tilt angle θt is the same). Another condition may be that the DI is the maximum in the negative direction (i.e., the difference between the directions of the plurality of transmission beams is the maximum (180°) in the bearing angle θb direction.

Note that these conditions are equal to that the directions of the two transmission beams may be symmetry with respect to the axis L0 in Fig. 1.

In this embodiment, transmissions and receptions for the transmission beams which satisfy the above conditions may be simultaneously performed, while transmissions and receptions for the transmission beams which do not satisfy the conditions are performed separately at different timings. Accordingly, the cycle required for processing all the transmission beams to be transmitted (one ping), can be effectively shortened, while the appearance of the false image due to the mutual interference is suppressed.

Fig. 7 is a flowchart illustrating control for transmitting and receiving the beam. This control may be executed by the signal processor 15 using the functions of the beam setting module 15a and the transmission/reception controlling module 15b illustrated in Fig. 3.

The beam setting module 15a may refer to a current setting status of the transmission beam 2 (Step S101). In detail, the beam setting module 15a may refer to the number and directions of the transmission beams 2 used for the underwater detection. As described above, the number and directions of the transmission beams 2 used for the underwater detection can be arbitrarily set by the user within the settable ranges. The number and directions of the transmission beams 2 set by the user may be stored in the storage medium in the signal processor 15. At Step S101, the beam setting module 15a may read the number and directions of the transmission beams 2 from the storage medium so as to refer to the current setting status of the transmission beams 2.

Next, when the plurality of transmission beams 2 are set, the beam setting module 15a may determine whether the combination of the transmission beams 2 which satisfies a given non-interference condition exists in the plurality of set transmission beams 2 (Step S102).

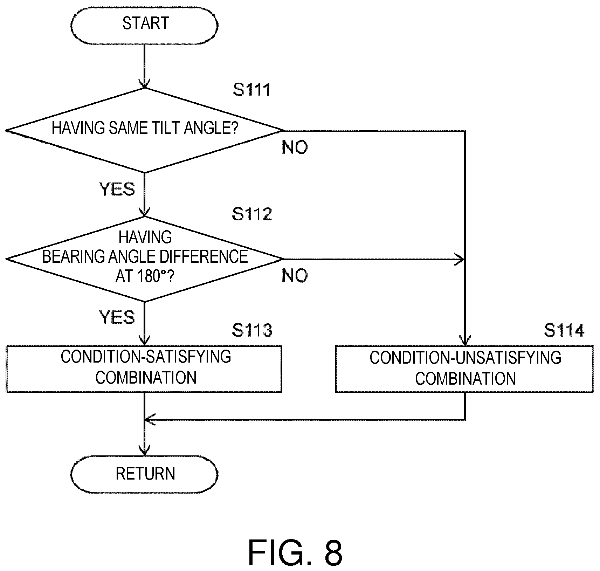

Fig. 8 is a flowchart illustrating processing for determining the non-interference condition at Step S102 of Fig. 7.

The beam setting module 15a may determine whether the combination of the transmission beams 2 exists in the plurality of transmission beams 2 used for the underwater detection, which satisfies the condition that the tilt angles θt of the transmission beams 2 are the same (Step S111), and the condition that the difference in the bearing angle θb therebetween is 180° (Step S112). If the two transmission beams 2 subject to the determination satisfy these two conditions (Step S111: YES, and Step S112: YES), the beam setting module 15a may set the two transmission beams 2 as a condition-satisfying combination (Step S113). On the other hand, if the two transmission beams 2 subject to the determination do not satisfy at least one of the two conditions, the beam setting module 15a may set the two transmission beams 2 as a condition-unsatisfying combination (Step S114). The beam setting module 15a may execute the determination of Fig. 8 for all of the combinations of the plurality of transmission beams 2 used for the underwater detection.

Referring to Fig. 7, in the determination at Step S102, the beam setting module 15a may determine whether all the combinations of the transmission beams 2 satisfy the non-interference condition (Step S103). For example, when the number of the transmission beams 2 used for the underwater detection is only two, and the tilt angles θt of the two transmission beams 2 are the same, and the difference in the bearing angle θb therebetween is 180°, the determination at Step S103 by the beam setting module 15a may be YES. In this case, corresponding to this determination, the transmission/reception controlling module 15b of Fig. 3 may control the transmitting part 12, the receiving part 13, and the transmission/reception switching part 14 so that the transmissions and receptions using the two transmission beams 2 are performed simultaneously (Step S104).

On the other hand, if the determination at Step S103 is NO, the beam setting module 15a may determine whether the combination satisfying the non-interference condition exists in some of the plurality of transmission beams 2 used for the underwater detection (Step S105). If the determination at Step S105 is YES, corresponding to this determination, the transmission/reception controlling module 15b of Fig. 3 may control the transmitting part 12, the receiving part 13, and the transmission/reception switching part 14 so that the transmissions and receptions using the combination of transmission beams 2 are performed simultaneously (Step S106). The transmission/reception controlling module 15b may execute the transmissions and receptions simultaneously for all the combinations which satisfy the non-interference condition (Steps S106 and S107).

If the simultaneous transmissions and receptions for all the combinations are finished (Step S107: YES), the transmission/reception controlling module 15b may determine whether the transmissions and receptions for all the transmission beams 2 used for the underwater detection are performed (Step S109). Here, it may be determined whether the transmission beam 2 used for the underwater detection still remains, other than the combination subject to the simultaneous transmissions and receptions at Step S106. If it is determined that other transmission beams remain (Step S109: NO), the transmission/reception controlling module 15b may execute the transmission and reception for the remaining transmission beam 2 (Step S108). Then, if the transmissions and receptions for all the transmission beams 2 are finished (Step S109: YES), the signal processor 15 may end the processing for one ping, and return to Step S101 to execute the processing for the next ping.

If the combination satisfying the non-interference condition does not exist in the plurality of transmission beams 2 used for the underwater detection (Step S103: NO and Step S105: NO), the transmission/reception controlling module 15b may control the transmitting part 12, the receiving part 13, and the transmission/reception switching part 14 so that the transmission and reception are performed for each of the transmission beams 2 (Step S108). Accordingly, if the transmissions and receptions for all the transmission beams 2 are finished (Step S109: YES), the signal processor 15 may end the processing for one ping, and return to Step S101 to execute the processing for the next ping.

Note that when the transmission beam 2 used for the underwater detection is only one, both of the determinations at Steps S103 and S105 may be NO. **In** this case, the transmission/reception controlling module 15b may execute the transmission and reception for the transmission beam 2 at Step S108, and then, end the processing for one ping.

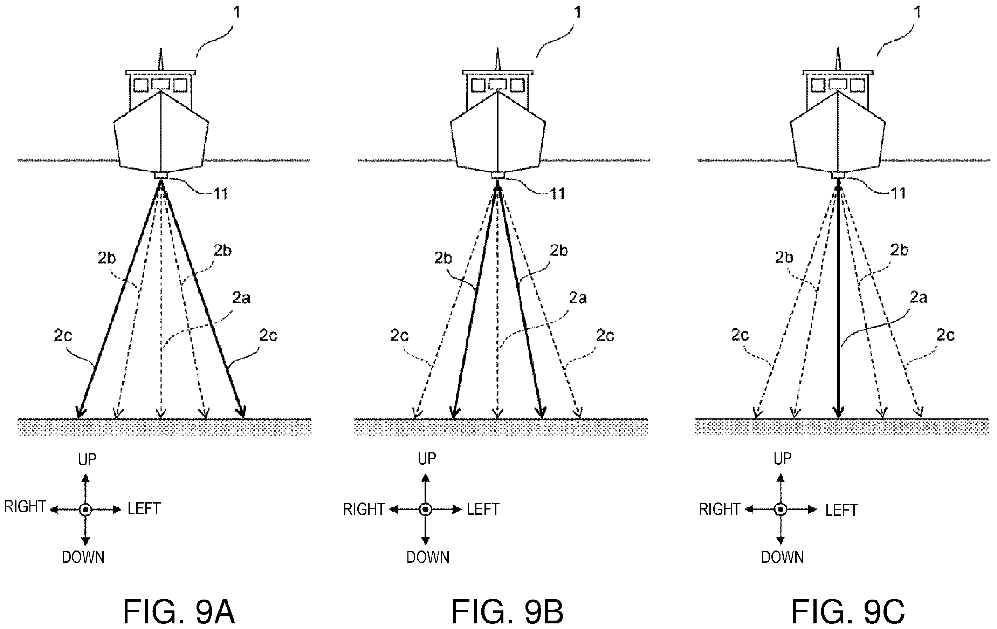

Figs. 9A, 9B, and 9C are views schematically illustrating controlling operation in a case where five transmission beams for the underwater detection are set in a given method.

Here, a directly-downward transmission beam 2a may be set to be sandwiched from left and right by two transmission beams 2b, and by two transmission beams 2c. The two transmission beams 2b may have the same tilt angle θt, and the difference in the bearing angle θb at 180°. Moreover, the two transmission beams 2c may have the same tilt angle θt, and the difference in the bearing angle θb at 180°. In Figs. 9A, 9B, and 9C, solid-line arrows indicate a transmitting state, and broken-line arrows indicate a non-transmitting state.

In this case, the combination of the two transmission beams 2b, and the combination of the two transmission beams 2c may satisfy the non-interference condition in Fig. 8. Therefore, after the transmissions and receptions are performed simultaneously for the two (left and right) transmission beams 2c as illustrated in Fig. 9A, the transmissions and receptions may be performed simultaneously for the two (left and right) transmission beams 2b as illustrated in Fig. 9B, and finally, the transmission and reception may be performed for the directly-downward transmission beam 2a as illustrated in Fig. 9C.

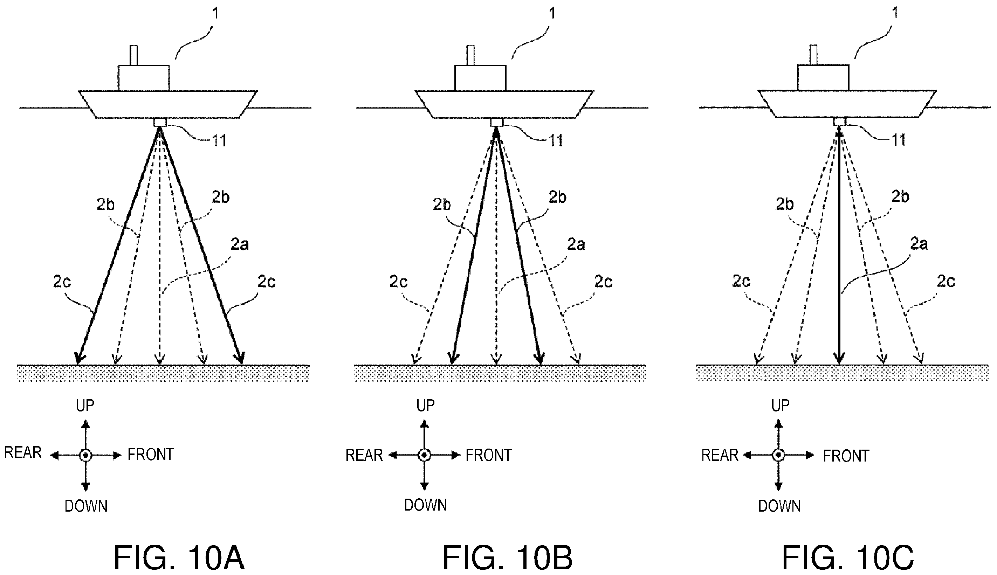

Figs. 10A, 10B, and 10C are views schematically illustrating controlling operation in a case where five transmission beams for the underwater detection are set in another method.

Here, the directly-downward transmission beam 2a may be set to be sandwiched from front and rear by the two transmission beams 2b, and by the two transmission beams 2c. The two transmission beams 2b may have the same tilt angle θt, and the difference in the bearing angle θb at 180°. Moreover, the two transmission beams 2c may have the same tilt angle θt, and the difference in the bearing angle θb at 180°. In Figs. 10A, 10B, and 10C, solid-line arrows indicate the transmitting state, and broken-line arrows indicate the non-transmitting state.

In this case, the combination of the two transmission beams 2b, and the combination of the two transmission beams 2c may satisfy the non-interference condition in Fig. 8. Therefore, after the transmissions and receptions are performed simultaneously for the two (front and rear) transmission beams 2c as illustrated in Fig. 10A, the transmissions and receptions may be performed simultaneously for the two (front and rear) transmission beams 2b as illustrated in Fig. 10B, and finally, the transmission and reception may be performed for the directly-downward transmission beam 2a as illustrated in Fig. 10C.

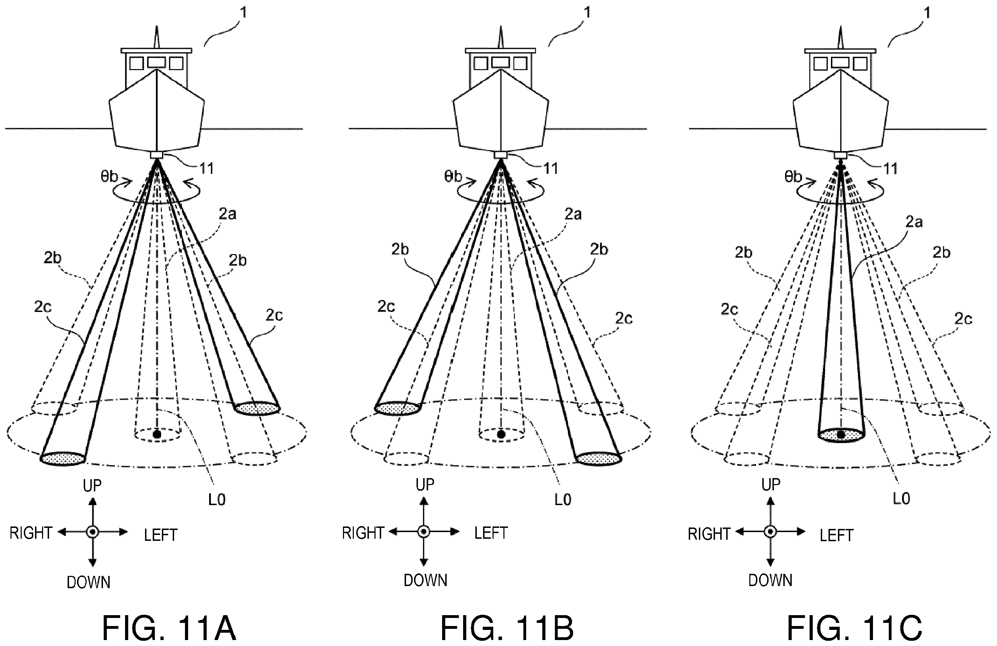

Figs. 11A, 11B, and11 C are views schematically illustrating controlling operation in a case where five transmission beams for the underwater detection are set in still another method.

Here, the two transmission beams 2b and the two transmission beams 2c may be set to surround the directly-downward transmission beam 2a. The two transmission beams 2b may have the same tilt angle θt, and the difference in the bearing angle θb at 180°. Moreover, the two transmission beams 2c may have the same tilt angle θt, and the difference in the bearing angle θb at 180°. In Figs. 11A, 11B, and 11C, the transmission beams in solid lines indicate the transmitting state, and the transmission beams in broken lines indicate the non-transmitting state.

In this case, the combination of the two transmission beams 2b, and the combination of the two transmission beams 2c may satisfy the non-interference condition in Fig. 8. Therefore, after the transmissions and receptions are performed simultaneously for the two transmission beams 2c as illustrated in Fig. 11A, the transmissions and receptions may be performed simultaneously for the two transmission beams 2b as illustrated in Fig. 11B, and finally, the transmission and reception may be performed for the directly-downward transmission beam 2a as illustrated in Fig. 11C.

### <Effects of Embodiment>

According to this embodiment, the following effects may be achieved.

Among the plurality of beams, the beams which satisfy the non-interference condition in Fig. 8 (i.e., the combination of beams which can suppress the mutual interference), may be simultaneously transmitted and received. Therefore, the cycle to finish the transmissions and receptions for all the beams (the cycle for one ping) can be shorter while the generation of the false image due to the mutual interference is suppressed.

As described with reference to Figs. 6A and 6B, the non-interference condition in Fig. 8 may be set based on the direction, the attenuation amount of the reflection intensity at the water-bottom (GAL), and the directivity characteristic (DI) of each beam.

In detail, the non-interference condition may be set such that the combination of beams are defined to have the minimum difference in the GAL, and the minimum DI with respect to each other.

This condition may be equal to that the directions of the combination of beams are symmetrical with respect to the axis extending directly below the transducer. That is, this condition may be equal to that the combination of beams has the same tilt angle θt, and the difference in the bearing angle θb is at 180°.

When this condition is satisfied, one beam may be most unlikely to interfere with the other beam, and the false image due to the other beam may be most unlikely to be generated. Therefore, by the non-interference condition being set to such a condition, the combination of beams which can suppress the influence of the mutual interference can be appropriately set, and thus, the generation of the false image due to the mutual interference can be effectively suppressed.

### <Modification 1>

In Modification 1, which is not encompassed by the wording of the claims, the non-interference condition is changed from the embodiment described above. That is, in Modification 1, the non-interference condition may be set such that the directions of the combination of beams are other than directly below.

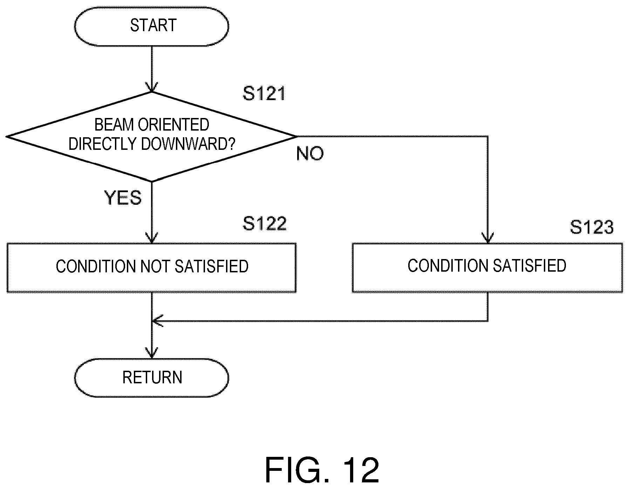

Fig. 12 is a flowchart illustrating processing for determining the non-interference condition according to Modification 1.

The transmission/reception controlling module 15b may determine that, among the transmission beams 2 used for the underwater detection, the transmission beam 2 oriented directly below, does not satisfy the non-interference condition (Step S121: YES, and Step S122). On the other hand, the transmission/reception controlling module 15b may determine that the transmission beam 2 oriented other than directly below satisfies the non-interference condition (Step S121: NO and Step S123).

Therefore, in Modification 1, by the control illustrated in Fig. 7, the beams oriented other than directly below among the transmission beams 2 used for the underwater detection, may be all transmitted and received simultaneously, and only the beam oriented directly below may be separately transmitted and received.

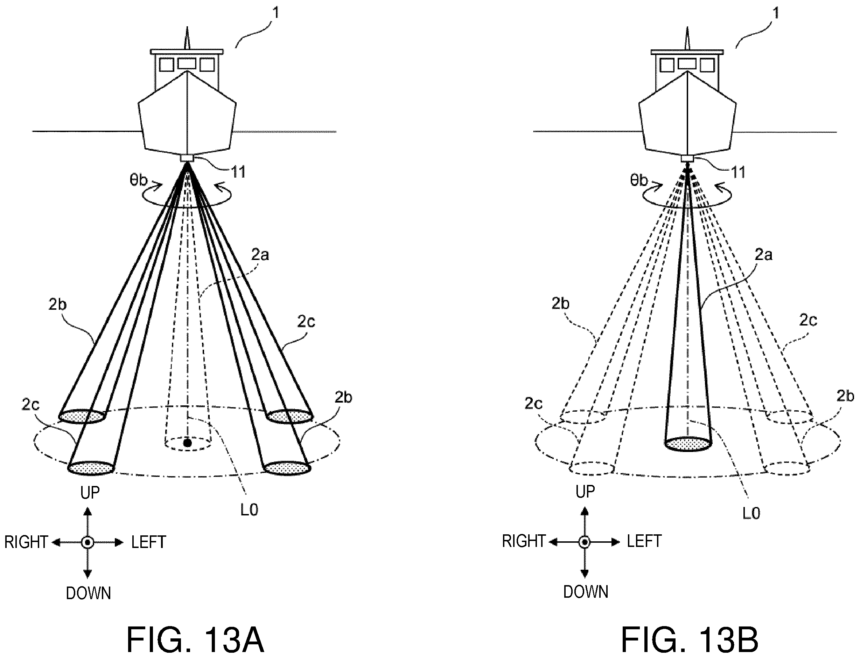

Figs. 13A and 13B are views schematically illustrating controlling operation according to Modification 1, in a case where five transmission beams for the underwater detection are set in a method similar to Figs. 11A, 11B, and 11C.

In this case, a combination of four beams comprised of the two transmission beams 2b and the two transmission beams 2c may satisfy the non-interference condition of Fig. 12. Therefore, after the transmissions and receptions are performed simultaneously for the two transmission beams 2b and the two transmission beams 2c as illustrated in Fig. 13A, the transmission and reception may be performed for the directly-downward transmission beam 2a as illustrated in Fig. 13B.

According to the configuration of Modification 1, the directly-downward transmission beam 2a most largely influenced by the GAL (i.e., the attenuation amount is the smallest) may not be subject to the simultaneous transmissions and receptions. Therefore, the false image due to the echo of the directly-downward transmission beam 2a from the water bottom, can be suppressed from appearing in the images based on the other transmission beams 2b and 2c. Moreover, since the transmission beams 2b and 2c oriented other than directly below are transmitted simultaneously, the cycle to finish the transmissions and receptions for all the transmission beams (the cycle of one ping) can be further shortened. Accordingly, the cycle to finish the transmissions and receptions for all the beams (the cycle of one ping) can be more remarkably shortened while suppressing the generation of the false image due to the mutual interference.

### <Modification 2>

In Modification 2, which is not encompassed by the wording of the claims, the non-interference condition is changed from the embodiment described above. That is, in Modification 2, the non-interference condition may be set only such that the combination of beams has the same tilt angle θt.

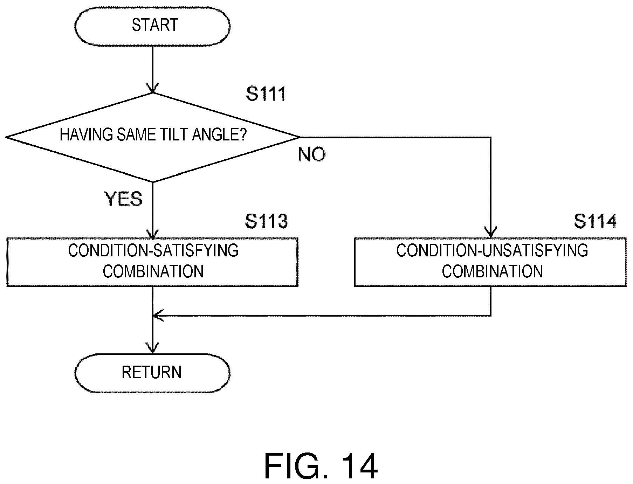

Fig. 14 is a flowchart illustrating processing for determining the non-interference condition according to Modification 2.

In the flowchart of Fig. 14, Step S112 of Fig. 8 is omitted. Other steps in Fig. 14 are similar to those in Fig. 8.

The transmission/reception controlling module 15b may determine that, among the transmission beams 2 used for the underwater detection, the combination of the transmission beams 2 having the same tilt angle θt satisfies the non-interference condition (Step S111: YES, and Step S113). On the other hand, the transmission/reception controlling module 15b may determine that the combination of the transmission beams 2 having the different tilt angles θt does not satisfy the non-interference condition (Step S111: NO and Step S114).

Therefore, in Modification 2, by the control illustrated in Fig. 7, the beams having the same tilt angle θt among the transmission beams 2 used for the underwater detection, may be all transmitted and received simultaneously regardless of whether the difference in the bearing angle θb is at 180°.

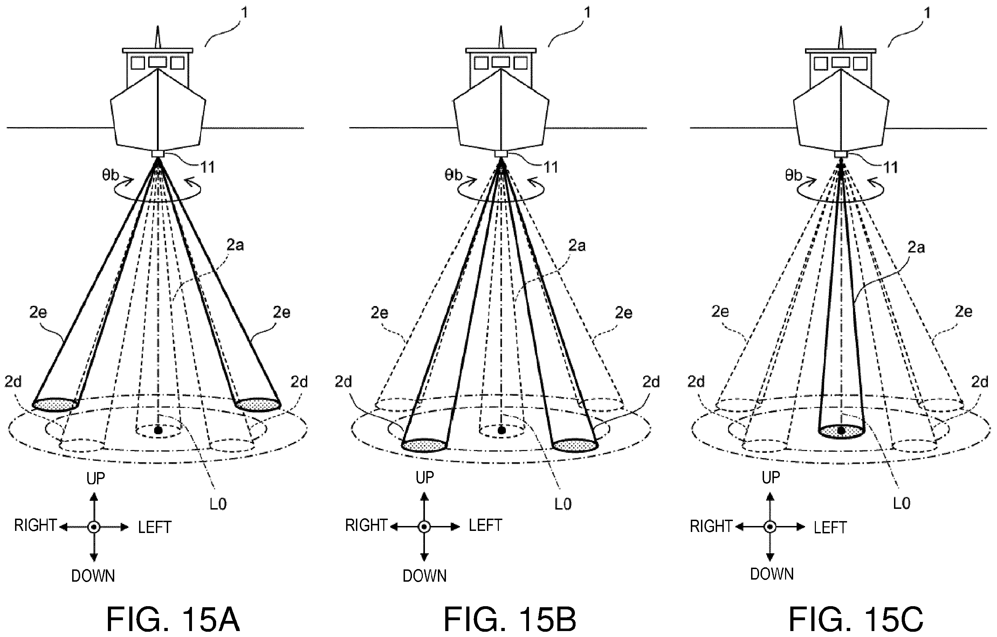

Figs. 15A, 15B, and 15C are views schematically illustrating controlling operation according to Modification 2, in a case where five transmission beams for the underwater detection are set in still another method.

Here, two transmission beams 2d and two transmission beams 2e may be set to surround the directly-downward transmission beam 2a. Although the two transmission beams 2d have the same tilt angle θt, the difference in the bearing angle θb may not be at 180°. Moreover, although the two transmission beams 2e have the same tilt angle θt, the difference in the bearing angle θb may not be at 180°. The tilt angle θt of the two transmission beams 2d may not be the same as that of the two transmission beams 2e. **In** Figs. 15A, 15B, and 15C, the transmission beams in solid lines indicate the transmitting state, and the transmission beams in broken lines indicate the non-transmitting state.

**In** this case, each of the combination of the two transmission beams 2d, and the combination of the two transmission beams 2e may satisfy the non-interference condition in Fig. 14. Therefore, after the transmissions and receptions are performed simultaneously for the two transmission beams 2e as illustrated in Fig. 15A, the transmissions and receptions may be performed simultaneously for the two transmission beams 2d as illustrated in Fig. 15B, and finally, the transmission and reception may be performed for the directly-downward transmission beam 2a as illustrated in Fig. 15C.

According to the configuration of Modification 2, since the transmission beams 2d having the same tilt angle θt are simultaneously transmitted, an echo of one transmission beam 2d from the water bottom and an echo of the other transmission beam 2d from the water bottom may reach the transducer 11 at substantially the same timing. Therefore, the signals based on the two echoes may be generated at substantially the same timing in the reception signal based on one transmission beam 2d, and thus, the false image may not be generated near the water-bottom image due to the signal based on the other echo. Moreover, since the plurality of transmission beams 2e (or the transmission beams 2d) having the same tilt angle θt are simultaneously transmitted, the cycle to finish the transmissions and receptions for all the transmission beams (cycle of one ping) can be shortened. Accordingly, the cycle to finish the transmissions and receptions for all the beams (cycle of one ping) can be shortened while suppressing the generation of the false image due to the mutual interference.

### <Modification 3>

In Modification 3, which is not encompassed by the wording of the claims, the non-interference condition is changed from the embodiment described above. That is, in Modification 3, the non-interference condition may be set only such that the combination of beams has the maximum (180°) difference in the bearing angle θb.

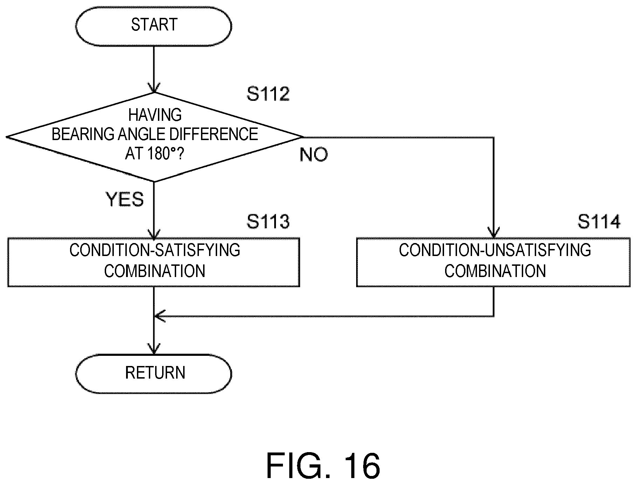

Fig. 16 is a flowchart illustrating processing for determining the non-interference condition according to Modification 3.

In the flowchart of Fig. 16, Step S111 of Fig. 8 is omitted. Other steps in Fig. 16 are similar to those in Fig. 8.

The transmission/reception controlling module 15b may determine that, among the transmission beams 2 used for the underwater detection, the combination of the transmission beams 2 having the difference in the bearing angle θb at 180° satisfies the non-interference condition (Step S112: YES, and Step S113). On the other hand, the transmission/reception controlling module 15b may determine that the combination of the transmission beams 2 having the difference in the bearing angle θb at other than 180°, does not satisfy the non-interference condition (Step S112: NO and Step S114).

Therefore, in Modification 3, by the control illustrated in Fig. 7, the beams having the difference in the bearing angle θb at 180° among the transmission beams 2 used for the underwater detection, may be all transmitted and received simultaneously regardless of whether the tilt angles θt are the same.

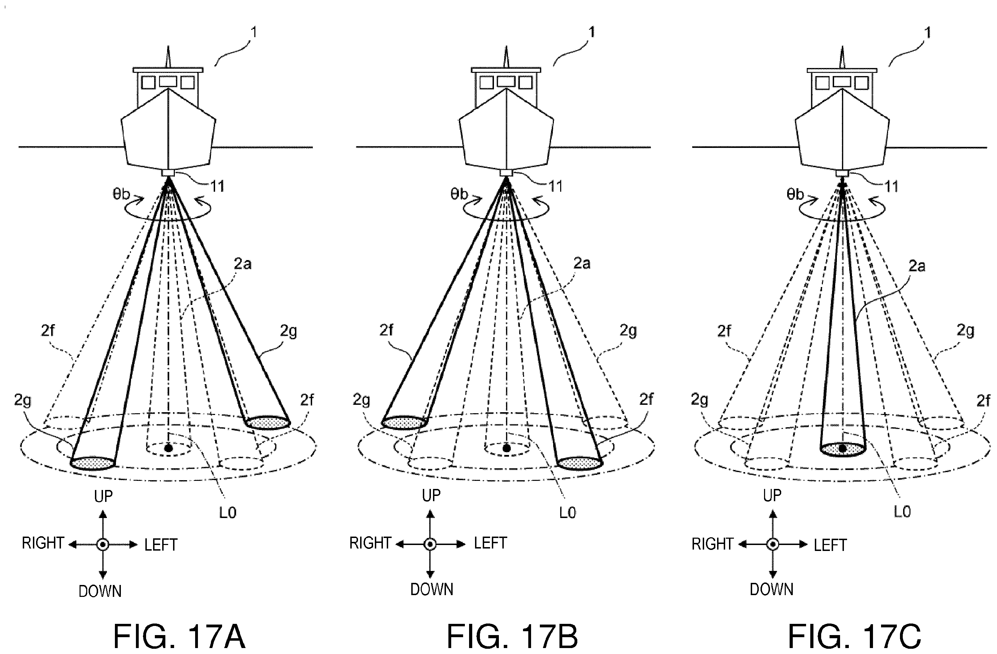

Figs. 17A, 17B, and 17C are views schematically illustrating controlling operation according to Modification 3, in a case where five transmission beams for the underwater detection are set in still another method.

Here, two transmission beams 2f and two transmission beams 2g may be set to surround the directly-downward transmission beam 2a. Although the two transmission beams 2f have the difference in the bearing angle θb at 180°, their tilt angles θt may not be the same. Moreover, although the two transmission beams 2g have the difference in the bearing angle θb at 180°, their tilt angles θt may not be the same. The forward transmission beams 2f and 2g may have the same tilt angle θt, and the rearward transmission beams 2f and 2g may have the same tilt angle θt. In Figs. 17A, 17B, and 17C, the transmission beams in solid lines indicate the transmitting state, and the transmission beams in broken lines indicate the non-transmitting state.

In this case, each of the combination of the two transmission beams 2f, and the combination of the two transmission beams 2g may satisfy the non-interference condition in Fig. 16. Therefore, after the transmissions and receptions are performed simultaneously for the two transmission beams 2f as illustrated in Fig. 17A, the transmissions and receptions may be performed simultaneously for the two transmission beams 2g as illustrated in Fig. 17B, and finally, the transmission and reception may be performed for the directly-downward transmission beam 2a as illustrated in Fig. 17C.

According to the configuration of Modification 3, since the transmission beams 2f having the maximum (180°) difference in the bearing angle θb are simultaneously transmitted, in terms of the DI, a reception signal of an echo of one transmission beam 2f may be unlikely to be affected by an echo of the other transmission beam 2f. Therefore, the false image can be suppressed from being generated near the water-bottom image due to the echo of the other transmission beam 2f from the water bottom. Moreover, since the plurality of transmission beams 2f (or the transmission beams 2g) having the maximum (180°) difference in the bearing angle θb are simultaneously transmitted, the cycle to finish the transmissions and receptions for all the transmission beams (cycle of one ping) can be shortened. Accordingly, the cycle to finish the transmissions and receptions for all the beams (cycle of one ping) can be shortened while suppressing the generation of the false image due to the mutual interference.

### <Other Modifications outside the subject-matter of the claims>

Although in the embodiment and Modifications 1 to 3, the condition for suppressing the influence of the mutual interference is set based on the GAL and the DI, the method of setting the condition is not limited to this. For example, when directivities of the beams are sensitive, and one beam substantially does not interfere with the other beam when the angle difference therebetween exceeds a given angle, the condition for suppressing the influence of the mutual interference may be set such that the angle difference between the beams exceeds the given angle.

Moreover, at Step S111 of Fig. 8, the tilt angles θt of the beams may be compared assuming that the ship 1 is in a horizontal position. However, when the ship 1 is inclined or tilted from the horizontal position, the determination at Step S111 may be executed by correcting the tilt angles θt of the beams according to the inclination.

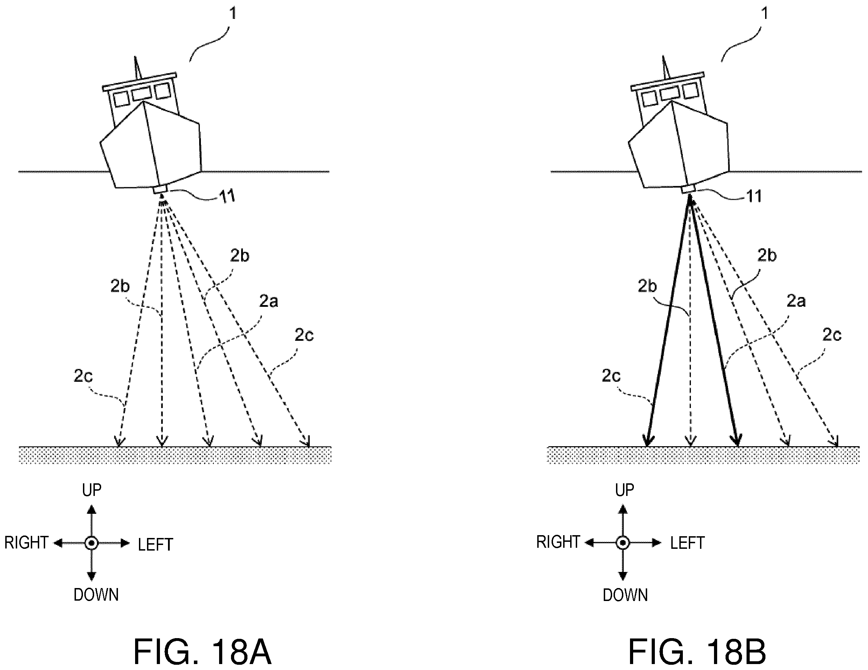

For example, when the ship 1 inclines (rolls) in the left-and-right direction as illustrated in Fig. 18A, the tilt angle θt of each transmission beam (the angle with respect to the axis extending vertically below from the transducer 11) may change from the tilt angle θt of the case where the ship 1 is in the horizontal position. However, when the user sets the direction of each transmission beam via the inputting part 16 in Fig. 3, the tilt angle θt of each transmission beam when the ship 1 is in the horizontal position, may be stored in the storage medium of the signal processor 15. Therefore, when the ship 1 is largely inclined as illustrated in Fig. 18A, a large angular difference may occur between the tilt angle θt of each transmission beam stored in the storage medium, and the tilt angle θt of an actual transmission beam.

Therefore, in such a case, the transmission/reception controlling module 15b may correct, according to the inclination angle of the ship 1, the tilt angle θt of each transmission beam read from the storage medium so that the tilt angle θt of the transmission beam becomes the actual tilt angle, and then, execute the determination at Step S111 of Fig. 8. Here, the transmission/reception controlling module 15b may acquire an inclining angle and an inclining direction of the ship 1 as needed, from a detecting part (not illustrated) for detecting the inclining angle of the ship 1.

In the case of Fig. 18A, according to this correction, the transmission beam 2a, which is supposed to be transmitted directly downwardly if the ship 1 is in the horizontal position, may be determined to have the same tilt angle θt as the rightmost transmission beam 2c. Accordingly, as illustrated in Fig. 18B, the transmissions and receptions may be performed simultaneously for these transmission beams 2a and 2c.

By such a correction, even when the ship 1 inclines, the combination of the transmission beams having the same incidence angle with respect to the water bottom may be determined to satisfy the non-interference condition in Fig. 8, and thus, they may be transmitted and received simultaneously. Accordingly, when the plurality of beams may be simultaneously transmitted and received by the processing in Fig. 7, the generation of the false image near the water-bottom image due to the echo of the other transmission beam can be more certainly suppressed.

Moreover, in the determination at Step S111 of Fig. 8, the tilt angles θt of the two transmission beams subject to the comparison may not necessarily fully match, but may be determined as YES at Step S111 when a difference in the tilt angles θt is within a given allowable range (about several degrees). Similarly, in the determination at Step S112 of Fig. 8, the difference in the bearing angle θb of the two transmission beams subject to the comparison is not necessarily at 180°, but may be determined as YES at Step S112 when the difference is within a given allowable range (about several degrees) from 180°.

Moreover, in the embodiment and Modifications 1 to 3, after the transmissions and receptions are performed simultaneously for the combinations of the transmission beams 2 which satisfy the non-interference condition, the transmission and reception may be performed separately for the transmission beam 2 which does not satisfy the non-interference condition. However, adversely, after the transmission and reception are performed separately for the transmission beam 2 which does not satisfy the non-interference condition, the transmissions and receptions may be performed simultaneously for the combinations of the transmission beams 2 which satisfy the non-interference condition. Moreover, also an order of the transmissions and receptions for the combinations of the transmission beams 2 which satisfy the non-interference condition, is not limited to the order illustrated in the embodiment and Modifications 1 to 3.

Moreover, the number and the setting methods of the transmission beams 2 to be used for the underwater detection are not limited to the modes illustrated in the embodiment and Modifications 1 to 3, and are variously changeable.

Moreover, although in this embodiment a single transducer 11 used for both of the transmission and reception of the waves is used, a transmitter and a receiver which operate separately may be unitized to constitute a transducer.

Moreover, although in this embodiment the directions of the transmission and reception beams are changed by the phase control to the ultrasonic oscillator 11a, separate transducers may be provided corresponding to a given plurality of directions, so that each transducer forms transmission and reception beams in directions different from the other transducers. In this case, the transmission beams satisfying the non-interference condition can be transmitted at exactly the same timing, and thus, the transmissions and receptions for these transmission beams can be performed exactly simultaneously.

In addition to these, the embodiment of the present disclosure can be variously changed within a scope of the appended claims.

### Description of Reference Characters

- 2, 2a-2g: Transmission Beam
- 10: Underwater Detection Device
- 11: Transducer
- 15: Signal Processor
- 15a: Beam Setting Module
- 15b: Transmission/Reception Controlling Module

## Claims

1. An underwater detection device (10), comprising:
a beam setting module (15a) configured to set, among a plurality of beams (2, 2a, 2b, 2c, 2d, 2e, 2f, 2g) set for underwater detection, a combination of beams (2, 2b, 2c, 2d, 2e, 2f, 2g) satisfying a condition for suppressing an influence of mutual interference between the beams; and
a transmission/reception controlling module (15b) configured to simultaneously transmit the combination of beams (2, 2b, 2c, 2d, 2e, 2f, 2g) and to simultaneously receive the combination of beams (2, 2b, 2c, 2d, 2e, 2f, 2g) satisfying the condition;
**characterized in that** the condition is satisfied when a difference between attenuation amounts of a reflection intensity at a water bottom of the combination of beams (2, 2b, 2c, 2d, 2e, 2f, 2g) is a minimum, and a difference between the directions of the combination of beams a maximum in a bearing direction, and
wherein the transmission/reception controlling module (15b) is configured to transmit and receive beams not satisfying the condition at different timings.

2. The underwater detection device (10) of claim 1, wherein the condition includes that directions of the combination of beams (2, 2b, 2c, 2d, 2e, 2f, 2g) are symmetrical with respect to an axis extending directly below a transducer (11).

3. The underwater detection device (10) of any one of claims 1 or 2, wherein the condition includes that directions of the combination of beams (2, 2b, 2c, 2d, 2e, 2f, 2g) are other than directly below a transducer (11).

4. The underwater detection device (10) of any one of claims 1 to 3, wherein the condition includes that directions of the combination of beams (2, 2b, 2c, 2d, 2e, 2f, 2g) have the same tilt angle (θt) with respect to an axis extending directly below a transducer (11).

5. An underwater detection method, comprising the steps of:
simultaneously transmitting a combination of beams (2, 2b, 2c, 2d, 2e, 2f, 2g) and simultaneously receiving a combination of beams (2, 2b, 2c, 2d, 2e, 2f, 2g) satisfying a condition for suppressing an influence of mutual interference between the beams, among beams (2, 2a, 2b, 2c, 2d, 2e, 2f, 2g) transmitted and received in different directions; and
transmitting and receiving a beam (2, 2a) not satisfying the condition at a different timing, among the beams (2, 2a, 2b, 2c, 2d, 2e, 2f, 2g) transmitted and received in different directions;
wherein the condition is satisfied when a difference between attenuation amounts of a reflection intensity at a water bottom of the combination of beams (2, 2b, 2c, 2d, 2e, 2f, 2g) is a minimum, and difference between the directions of the combination of beams is a maximum in a bearing direction.

## Patentansprüche

1. Unterwasserdetektionsvorrichtung (10), die Folgendes umfasst:
ein Strahleinstellmodul (15a), konfiguriert zum Einstellen, unter mehreren für Unterwasserdetektion eingestellten Strahlen (2, 2a, 2b, 2c, 2d, 2e, 2f, 2g), einer Kombination von Strahlen (2, 2b, 2c, 2d, 2e, 2f, 2g), die eine Bedingung zur Unterdrückung eines Einflusses gegenseitiger Interferenz zwischen den Strahlen erfüllen; und
ein Sende-/Empfangssteuermodul (15b), konfiguriert zum gleichzeitigen Senden der Kombination von Strahlen (2, 2b, 2c, 2d, 2e, 2f, 2g) und zum gleichzeitigen Empfangen der Kombination von Strahlen (2, 2b, 2c, 2d, 2e, 2f, 2g), die die Bedingung erfüllen;
**dadurch gekennzeichnet, dass** die Bedingung erfüllt ist, wenn eine Differenz zwischen Dämpfungsgraden einer Reflexionsintensität an einem Gewässergrund der Kombination von Strahlen (2, 2b, 2c, 2d, 2e, 2f, 2g) ein Minimum und eine Differenz zwischen den Richtungen der Kombination von Strahlen ein Maximum in einer Peilrichtung ist, und
wobei das Sende-/Empfangssteuermodul (15b) zum Senden und Empfangen von die Bedingung nicht erfüllenden Strahlen zu unterschiedlichen Zeitpunkten konfiguriert ist.

2. Unterwasserdetektionsvorrichtung (10) nach Anspruch 1, wobei die Bedingung beinhaltet, dass Richtungen der Kombination von Strahlen (2, 2b, 2c, 2d, 2e, 2f, 2g) symmetrisch zu einer Achse sind, die sich direkt unterhalb eines Wandlers (11) erstreckt.

3. Unterwasserdetektionsvorrichtung (10) nach Anspruch 1 oder 2, wobei die Bedingung beinhaltet, dass Richtungen der Kombination von Strahlen (2, 2b, 2c, 2d, 2e, 2f, 2g) nicht direkt unterhalb eines Wandlers (11) liegen.

4. Unterwasserdetektionsvorrichtung (10) nach einem der Ansprüche 1 bis 3, wobei die Bedingung beinhaltet, dass Richtungen der Kombination von Strahlen (2, 2b, 2c, 2d, 2e, 2f, 2g) denselben Neigungswinkel (θt) in Bezug auf eine Achse aufweisen, die sich direkt unterhalb eines Wandlers (11) erstreckt.

5. Unterwasserdetektionsverfahren, das die folgenden Schritte beinhaltet:
gleichzeitiges Senden einer Kombination von Strahlen (2, 2b, 2c, 2d, 2e, 2f, 2g) und gleichzeitiges Empfangen einer Kombination von Strahlen (2, 2b, 2c, 2d, 2e, 2f, 2g), die eine Bedingung zur Unterdrückung eines Einflusses gegenseitiger Interferenz zwischen den Strahlen erfüllen, unter Strahlen (2, 2a, 2b, 2c, 2d, 2e, 2f, 2g), die in unterschiedlichen Richtungen gesendet und empfangen werden; und
Senden und Empfangen eines Strahls (2, 2a), der die Bedingung nicht erfüllt, zu einem unterschiedlichen Zeitpunkt unter den in unterschiedlichen Richtungen gesendeten und empfangenen Strahlen (2, 2a, 2b, 2c, 2d, 2e, 2f, 2g);
wobei die Bedingung erfüllt ist, wenn eine Differenz zwischen Dämpfungsgraden einer Reflexionsintensität an einem Gewässergrund der Kombination von Strahlen (2, 2b, 2c, 2d, 2e, 2f, 2g) ein Minimum und eine Differenz zwischen den Richtungen der Kombination von Strahlen ein Maximum in einer Peilrichtung ist.

## Revendications

1. Dispositif de détection sous-marine (10), comprenant :
un module de réglage de faisceau (15a) configuré pour régler, parmi une pluralité de faisceaux (2, 2a, 2b, 2c, 2d, 2e, 2f, 2g) réglés pour une détection sous-marine, une combinaison de faisceaux (2, 2b, 2c, 2d, 2e, 2f, 2g) satisfaisant à une condition pour supprimer une influence d'une interférence mutuelle entre les faisceaux ; et
un module de commande d'émission/réception (15b) configuré pour émettre simultanément la combinaison de faisceaux (2, 2b, 2c, 2d, 2e, 2f, 2g) et pour recevoir simultanément la combinaison de faisceaux (2, 2b, 2c, 2d, 2e, 2f, 2g) satisfaisant à la condition ;
le dispositif étant **caractérisé en ce que** :
la condition est satisfaite lorsqu'une différence entre des amplitudes d'atténuation d'une intensité de réflexion au niveau d'un fond de l'eau de la combinaison de faisceaux (2, 2b, 2c, 2d, 2e, 2f, 2g) est un minimum et qu'une différence entre les directions de la combinaison de faisceaux est un maximum dans une direction de relèvement, et
le module de commande d'émission/réception (15b) étant configuré pour émettre et recevoir des faisceaux ne satisfaisant pas à la condition à des moments différents.

2. Dispositif de détection sous-marine (10) selon la revendication 1, la condition comprenant le fait que des directions de la combinaison de faisceaux (2, 2b, 2c, 2d, 2e, 2f, 2g) soient symétriques par rapport à un axe s'étendant directement au-dessous d'un transducteur (11).

3. Dispositif de détection sous-marine (10) selon l'une quelconque des revendications 1 ou 2, la condition comprenant le fait que des directions de la combinaison de faisceaux (2, 2b, 2c, 2d, 2e, 2f, 2g) soient autres que directement au-dessous d'un transducteur (11).

4. Dispositif de détection sous-marine (10) selon l'une quelconque des revendications 1 à 3, la condition comprenant le fait que des directions de la combinaison de faisceaux (2, 2b, 2c, 2d, 2e, 2f, 2g) aient le même angle d'inclinaison (θt) par rapport à un axe s'étendant directement au-dessous d'un transducteur (11).

5. Procédé de détection sous-marine, comprenant les étapes consistant à :
émettre simultanément une combinaison de faisceaux (2, 2b, 2c, 2d, 2e, 2f, 2g) et recevoir simultanément une combinaison de faisceaux (2, 2b, 2c, 2d, 2e, 2f, 2g) satisfaisant à une condition pour supprimer une influence d'une interférence mutuelle entre les faisceaux, parmi des faisceaux (2, 2a, 2b, 2c, 2d, 2e, 2f, 2g) émis et reçus dans des directions différentes ; et
émettre et recevoir un faisceau (2, 2a) ne satisfaisant pas à la condition à un moment différent, parmi les faisceaux (2, 2a, 2b, 2c, 2d, 2e, 2f, 2g) émis et reçus dans des directions différentes ;
la condition étant satisfaite lorsqu'une différence entre des amplitudes d'atténuation d'une intensité de réflexion au niveau d'un fond de l'eau de la combinaison de faisceaux (2, 2b, 2c, 2d, 2e, 2f, 2g) est un minimum et qu'une différence entre les directions de la combinaison de faisceaux est un maximum dans une direction de relèvement.
